Europäisches Patentamt

European Patent Office

Office européen des brevets

(19)

(11) Numéro de publication: **0 060 757**
**B1**

(12) **FASCICULE DE BREVET EUROPEEN**

(45) Date de publication du fascicule du brevet:
05.12.84

(51) Int. Cl.³: **F 16 C 11/06**

(21) Numéro de dépôt: **82400375.0**

(22) Date de dépôt: **04.03.82**

---

(54) **Articulation à rotule.**

---

(30) Priorité: **06.03.81 FR 8104797**

(43) Date de publication de la demande:
**22.09.82 Bulletin 82/38**

(45) Mention de la délivrance du brevet:
**05.12.84 Bulletin 84/49**

(84) Etats contractants désignés:
**BE DE GB IT NL SE**

(56) Documents cités:
**FR - A - 1 523 749**
**GB - A - 759 297**
**US - A - 2 478 660**
**US - A - 2 654 643**
**US - A - 3 007 747**

(73) Titulaire: **SKF COMPAGNIE D'APPLICATIONS MECANIQUES & Cie, F-26241 Saint Vallier sur Rhone (FR)**

(72) Inventeur: **Roberge, Gérard, 42, avenue Sadi Carnot, 26000 Valence (FR)**

(74) Mandataire: **Boivin, Claude, 9, rue Edouard-Charton, F-78000 Versailles (FR)**

---

## Description

Une rotule comprend une bague extérieure présentant une cavité en forme de portion de sphère, et une bague intérieure dont la forme est en partie sphérique et qui est logée dans la cavité sphérique de la bague extérieure.

Diverses solutions ont été proposées pour permettre le montage de la bague intérieure dans la cavité de la bague extérieure. C'est ainsi que, dans certaines rotules, la bague extérieure est fendue, ce qui permet de l'ouvrir élastiquement et d'y introduire la bague intérieure. Dans d'autres rotules, la bague extérieure est emboutie sur la bague intérieure. Il est également possible de constituer la rotule à l'aide de plusieurs pièces rapportées, assemblées par une frette ou une soudure.

On connaît également des rotules dans lesquelles la cavité de la bague extérieure présente deux encoches diamétralement opposées, sur une partie de son épaisseur, le diamètre de ces encoches étant égal au diamètre de la bague intérieure et leur largeur égale à celle de cette bague. Il est alors possible de mettre en place la bague intérieure en orientant cette dernière à 90° de sa position normale; il suffit ensuite de faire pivoter la bague intérieure pour la remettre dans son orientation correcte.

Mais ces rotules présentent des inconvénients qui limitent leurs domaines d'emploi; en particulier, on ne peut guère les utiliser lorsque la rotule est soumise à une charge radiale et axiale élevée. Dans le cas d'une rotule à encoches usuelles, par exemple, ces encoches diminuent de façon importante la surface de contact des deux bagues et la concentration des efforts sur la surface restante, qui en résulte, entraîne une détérioration rapide de la rotule.

Le brevet américaine 3 007 747 a pour objet une rotule dont la bague intérieure comporte une série de fraisures relativement étroites délimitant des nervures annulaires radiales, alors que sa bague extérieure présente une série de fraisures permettant le passage des nervures annulaires de la bague intérieure. Mais cette rotule résiste encore plus mal à une charge axiale, notamment à cause de la minceur des nervures qui peuvent fléchir sous l'effet de cette charge.

La présente invention a pour objet une rotule perfectionnée de manière à pouvoir supporter des charges axiales et/ou radiales importantes.

Cette rotule est du type dans lequel la cavité de la bague extérieure présente des encoches diamétralement opposées sur une partie de son épaisseur, qui coopèrent avec des encoches présentées par la bague intérieure pour permettre le montage de la bague intérieure dans la cavité de la bague extérieure et est caractérisée en ce que la bague intérieure présente uniquement deux encoches diamétralement opposées disposées sensiblement symétriquement par rapport au plan médian perpendiculaire à l'axe de la bague et en ce que la bague extérieure présente uniquement deux paires d'encoches qui ont une largeur égale au jeu près à la largeur des parties de la bague intérieure qui flanquent les encoches, les deux encoches d'une même paire étant espacées l'une de l'autre d'une distance égale au jeu près à la largeur des encoches de la bague intérieure.

On a décrit ci-après, à titre d'exemple non limitatif, un mode de réalisation de l'articulation à rotule selon la présente invention avec référence au dessin annexé dans lequel:

la figure 1 est une vue en élévation de la rotule;

la figure 2 en est une coupe suivant II-II de la figure 1;

la figure 3 est une vue en plan de la bague intérieure;

la figure 4 est une vue en perspective montrant la mise en place de la bague intérieure de la rotule dans la bague extérieure de celle-ci;

la figure 5 est une vue en coupe axiale de la rotule, lors de cette mise en place;

la figure 6 est une coupe suivant VI-VI de la figure 5.

Telle qu'elle est représentée au dessin, l'articulation à rotule selon l'invention comprend une bague extérieure 1 et une bague intérieure 2.

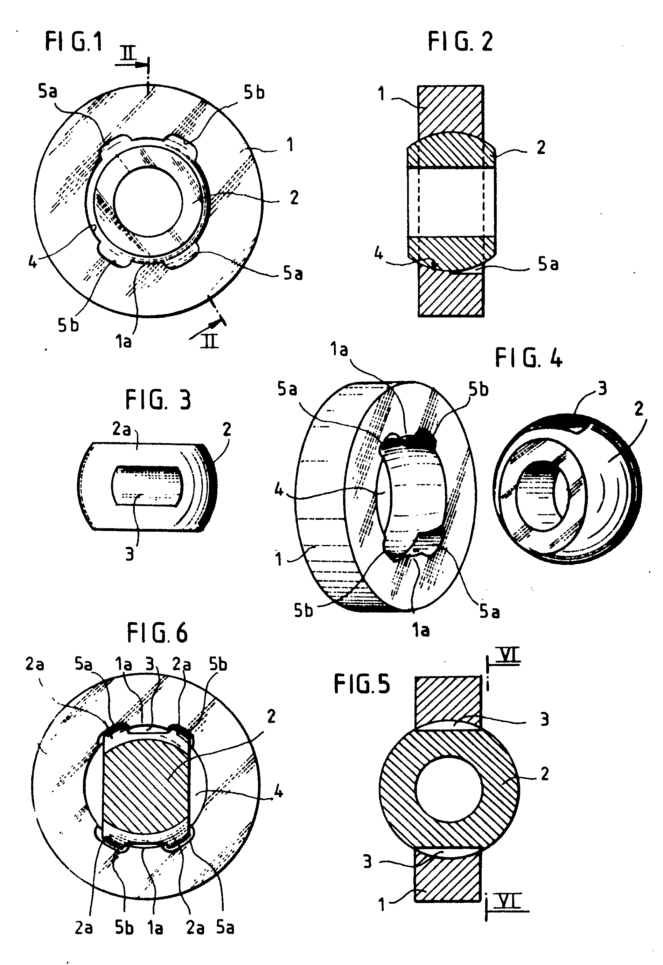

La bague intérieure 2 présente extérieurement la forme d'une sphère tronquée et comporte deux fraisures ou encoches 3 qui sont diamétralement opposées et disposées sensiblement symétriquement par rapport au plan médian perpendiculaire à la bague; leur largeur, telle qu'elle est vue notamment à la figure 6, est au moins égale à 40% de l'épaisseur de la bague extérieure 1 et au plus égale à 80% de l'épaisseur de la bague intérieure.

De son côté, la bague extérieure 1 présente une cavité 4 en forme de portion de sphère, le rayon de celle-ci étant égal au jeu près à celui de la bague 2; elle comporte deux paires d'encoches 5a et 5b qui sont diamétralement opposées et s'étendent sur sensiblement la moitié de l'épaisseur de la bague. Le fond de chacune de ces encoches a une formy cylindrique, avec un rayon légèrement supérieur à celui de la bague intérieure 2. Ces encoches ont une largeur légèrement supérieure à celles des parties 2a de la bague 2 qui flanquent les encoches 3 et chaque encoche 2a est espacée de l'encoche adjacente 2b d'une distance légèrement supérieure à la largeur de ces encoches.

Pour mettre en place la bague intérieure 2 dans la bague 1, on oriente la bague 2 à 90° de sa position normale, comme le montre la figure 4, et on l'emmanche dans la face de la bague 1 dans laquelle se trouvent les encoches 5a et 5b. Lors de cette manoeuvre, les parties 1a de la bague 1 qui se trouvent entre les encoches 5a et 5b s'engagent dans les encoches 3 en même temps que les parties 2a de la bague 2 s'engagent dans les encoches 5a et 5b (voir figure 6). En fin de mouvement, l'axe de la bague 2 se trouve dans le plan de la bague 1, comme le montre la figure 5. Il suffit alors de faire pivoter la bague intérieure 2 pour la ramener dans sa position normale (figure 2); cette bague ne peut alors plus s'échapper de la bague extérieure 1.

Lorsque la rotule est soumise à une charge qui, à la figure 1, est verticale et dirigée vers le bas, cette charge est supportée sans difficulté par la partie 1a de la bague extérieure 1. Si la direction de la charge est oblique et passe par une encoche 5a ou 5b, cette charge est également très bien supportée par l'articulation du fait de la faible largeur de l'encoche. D'une façon générale, l'articulation peut supporter des charges radiales et/ou axiales plus importantes que les articulations à rotule usuelles.

## Revendications

1. Articulation à rotule comprenant une bague extérieure (1) présentant une cavité en forme de portion de sphère, et une bague intérieure (2) dont la forme est en partie sphérique et qui est logée dans la cavité sphérique de la bague extérieure, la cavité de la bague extérieure présentant, sur une partie de son épaisseur, des encoches (5a et 5b) diamétralement opposées, qui coopèrent avec les encoches (3) presentées par la bague intérieure pour permettre le montage de la bague intérieure dans la cavité de la bague extérieure, caractérisée en ce que la bague intérieure (2) présente uniquement deux encoches (3) diamétralement opposées, disposées sensiblement symétriquement par rapport au plan médian perpendiculaire à l'axe de la bague, et en ce que la bague extérieure (1) présente uniquement deux paires d'encoches (5a et 5b) qui ont une largeur au jeu près à la largeur des parties de la bague (2) qui flanquent les encoches (3), les deux encoches (5a et 5b) d'une même paire étant espacées l'une de l'autre d'une distance égale au jeu près à la largeur des encoches (3) de la bague intérieure, et l'ensemble des deux encoches d'une paire s'étendant sur une largeur sensiblement égale à l'épaisseur de la bague intérieure.

2. Articulation à rotule selon la revendication 1, caractérisée en ce que la largeur des encoches (3) de la bague intérieure est au moins égale à 40% de l'épaisseur de la bague extérieure.

3. Articulation à rotule selon la revendication 1, caractérisée en ce que la largeur des encoches (3) de la bague intérieure est au plus égale à 80% de l'épaisseur de cette bague intérieure.

## Patentansprüche

1. Schwenklager, bestehend aus einem Aussenring (1) mit einem Hohlraum in Form eines Kugelbereichs und einem Innenring (2) in Form eines Kugelbereichs, der in dem kugelförmigen Hohlraum des Aussenrings angeordnet ist, wobei der Hohlraum des Aussenrings auf einem Bereich seiner Dicke einander diametral gegenüberliegende Ausnehmungen (5a und 5b) aufweist, die mit am Innenring angeordneten Ausnehmungen (3) zusammenwirken, um den Einbau des Innenrings in den Hohlraum des Aussenrings zu ermöglichen, dadurch gekennzeichnet, dass der Innenring (2) lediglich zwei einander diametral gegenüberliegende Ausnehmungen (3) aufweist, die in berzug auf eine zur Achse des Lagers rechtwinklige Meridianebene im wesentlichen symmetrisch angeordnet sind, und dass der Aussenring (1) lediglich zwei Paare von Ausnehmungen (5a und 5b) aufweist, deren Breite etwas grösser ist als die Breite der die Ausnehmungen (3) flankierenden Bereiche des Innenrings (2), wobei der Abstand der beiden Ausnehmungen (5a und 5b) eines Paares fast so gross ist wie die Breite der Ausnehmungen (3) des Innenrings und wobei sich die beiden Ausnehmungen eines Paares insgesamt über eine Breite erstrekken, die im wesentlichen der Dicke des Innenrings entspricht.

2. Schwenklager nach Anspruch 1, dadurch gekennzeichnet, dass die Breite der Ausnehmungen (3) des Innenrings mindestens 40% der Dicke des Aussenrings entspricht.

3. Schwenklager nach Anspruch 1, dadurch gekennzeichnet, dass die Breite der Ausnehmungen (3) des Innenrings höchstens 80% der Dicke des Innenrings beträgt.

## Claims

1. Ball-joint comprising an outer ring (1) having a cavity in the shape of a sphere portion and an inner ring (2) whose shape is partly spherical and which is housed in the spherical cavity of the outer ring, the cavity of the outer ring having over a part of its thickness diametrically opposite notches (5a and 5b) which cooperate with notches (3) formed in the inner ring so as to allow the inner ring to be mounted in the cavity of the outer ring, characterized in that the inner ring (2) has only two diametrically opposite notches (3), disposed substantially symmetrically with respect to the median plane perpendicular to the axis of the ring, and in that the outer ring (1) has only two pairs of notches (5a and 5b) which have a width equal, except for the clearance, to the width of the parts of the ring (2) which flank the notches (3), the two notches (5a and 5b) of the same pair being spaced from each other by a distance equal, except for the clearance, to the width of the notches (3) of the inner ring, and the set of two notches of a pair extending over a width substantially equal to the thickness of the inner ring.

2. Ball-joint according to claim 1, characterized in that the width of the notches (3) of the inner ring is at least equal to 40% of the thickness of the outer ring.

3. Ball-joint according to claim 1, characterized in that the width of the notches (3) of the inner ring is at most equal to 80% of the thickness of this inner ring.

FIG.1

FIG. 2

FIG. 3

FIG. 4

FIG. 6

FIG.5